# FASCICULE DE BREVET EUROPEEN

(11) **EP 1 749 415 B1**
(45) Date de publication et mention de la délivrance du brevet: **02.07.2014**
(21) Numéro de dépôt: 05717436.9
(22) Date de dépôt: 18.01.2005
(51) Int. Cl.: H04M 1/2745, H04M 1/725, H04W 8/24, H04W 12/12, H04W 88/06

(54) **PROCEDES DE SECURISATION D'APPAREILS TELS QUE DES TERMINAUX MOBILES, ET ENSEMBLES SECURISES COMPRENANT DE TELS APPAREILS**
VERFAHREN ZUR SICHERUNG VON EINRICHTUNGEN WIE ETWA MOBILEN ENDGERÄTEN UND SOLCHE EINRICHTUNGEN UMFASSENDE GESICHERTE BAUGRUPPEN
METHODS OF SECURING DEVICES SUCH AS MOBILE TERMINALS, AND SECURED ASSEMBLIES COMPRISING SUCH DEVICES

(30) Priorité: 19.01.2004 FR 0400455; 17.05.2004 FR 0405338
(43) Date de publication de la demande: 07.02.2007
(73) Titulaire: Barret, Patrick, 75016 Paris (FR); De Beuil, Michel, 60240 Fay-les-Etangs (FR); Bosson, Jean-Marc, 92210 Saint-Cloud (FR); Cronier, Thibault, 92210 Saint-Cloud (FR); Cusin, Jacques-Pascal, 1026 Genève (CH); Desmoulins, Pierre-Eric, 75011 Paris (FR); Domange, Antoine, 75016 Paris (FR); Mamou, Ghislaine, 92100 Boulogne-Billancourt (FR); Mamou, Michael, 92100 Boulogne-Billancourt (FR); Poilpot, Loïc, 63800 Saint-Bonnet-les-Allier (FR); Poussot, Jean-Marie, 45650 Saint-Jean-le-Blanc (FR); Thedrel, Alain, 13009 Marseille (FR); Vernet, Philippe, 77380 Combs-la-Ville (FR)
(72) Inventeur: BARRET, Patrick, F-75016 Paris (FR)
(74) Mandataire: Le Forestier, Eric
(86) Numéro de dépôt international: PCT/FR2005/000105
(87) Numéro de publication internationale: WO 2005/079079

(56) Documents cités:
- EP-A- 1 239 630
- WO-A-03/081934
- WO-A-2004/003801
- US-A1- 2002 082 992
- US-A1- 2002 170 969

## Description

La présente invention concerne d'une façon générale le domaine des terminaux en particulier mobiles et portables dotés d'une unité centrale, d'une mémoire, d'interfaces utilisateur, d'une source d'énergie embarquée et de circuits de communication avec l'extérieur. Il peut s'agir notamment de terminaux de téléphonie mobile, d'assistants numériques personnels, d'ordinateurs portables, etc.

Elle concerne plus précisément de nouvelles fonctionnalités d'échange d'informations par communication de proximité entre un tel terminal et un dispositif - également mobile mais distinct du terminal - de façon à offrir certains avantages en matière notamment de sauvegarde de données personnelles en cas de vol ou de perte du terminal, et/ou de protection contre une utilisation frauduleuse du terminal en cas de perte ou de vol (avec ainsi un effet de dissuasion contre le vol).

On connaît certaines techniques permettant de limiter les risques de perte de données (tels que des données de répertoire dans un terminal de téléphonie mobile) par exemple par synchronisation de la mémoire de données du téléphone avec un logiciel de gestion de contacts prévu dans un ordinateur personnel. Ceci implique toutefois d'avoir à sa disposition un tel ordinateur personnel.

On connaît également des techniques basiques (code PIN, etc.) permettant de limiter l'utilisation frauduleuse d'un téléphone mobile en cas de perte ou de vol. Mais les limites de ces solutions sont vite atteintes, notamment par le fait que la fonction de sécurité associée se situe dans la puce (SIM), et qu'il suffit de remplacer cette puce pour rendre le terminal à nouveau utilisable.

On a également proposé un certain nombre de solutions pour permettre de n'utiliser un terminal de téléphonie mobile que si certaines autres conditions sont remplies.

Ainsi par exemple le document EP-A-0 838 907 décrit des procédés dans lesquels l'utilisation d'un terminal de téléphonie mobile est conditionnée à une relation de proximité entre le terminal et un objet porté par l'utilisateur, tel qu'un clip de ceinture.

Le document EP 1 239 630 A décrit un procédé de sécurisation des échanges de données entre terminaux communicant via la norme IEEE 802 (Bluetooth).

Le document WO 2004/0038010 décrit un système pour localiser des informations disponibles et des services ou applications via des terminaux mobiles utilisant une technologie RFID. Ainsi un terminal mobile est muni d'un lecteur RFID qui, via un signal d'activation, active un transpondeur RFID situé à proximité du mobile et qui est apte à recevoir un identifiant d'application utilisé par le terminal afin de démarrer une application correspondante ; le transpondeur contient facultativement du contenu pouvant être exploré par le terminal.

Le document US 2002/0170969 décrit un ordinateur portable et un lecteur tel qu'il puisse être construit comme un module standard amovible pour ordinateur et qu'il puisse être utilisé seulement quand une interrogation RFID est souhaitée. Le module peut comprendre une antenne, une électronique de lecture RFID et une batterie associée, l'ensemble de ces éléments étant séparés dudit ordinateur portable.

Le document WO 03/081934 A décrit un processus qui est inverse de celui de l'invention, à savoir l'incorporation d'une étiquette RFID dans un téléphone mobile, étiquette qui peut être lue par un lecteur RFID extérieur au mobile.

La présente invention vise à permettre d'améliorer la protection contre la pertes de données personnelles ou contre l'utilisation frauduleuse d'un terminal ou autre appareil mobile en cas de perte ou de vol, d'une façon particulièrement sûre et sans nuire à l'ergonomie d'utilisation du terminal ou autre appareil.

A cet effet, l'invention propose, selon un premier aspect, un procédé de sauvegarde de données personnelles contenues dans un terminal mobile, le terminal comprenant une unité centrale associée à une mémoire, des moyens d'entrée de données et des moyens d'affichage de données, caractérisé en ce qu'il comprend les étapes suivantes :
- prévoir dans le terminal un dispositif d'émission-réception RFID,
- prévoir de façon séparée du terminal une étiquette RFID contenant une mémoire d'identification et une mémoire de travail, et apte à entrer en communication sans fil de proximité avec le dispositif d'émission-réception,
- lors de la création ou la modification de certaines données personnelles dans le terminal à l'aide des moyens d'entrée de données, écrire des données correspondantes dans la mémoire de travail de l'étiquette après avoir effectué une vérification d'identité de ladite étiquette.

On entend RFID la technologie générale des étiquettes à mémoire de petites dimensions, aptes à entrer en communication sans fil avec un dispositif interrogateur, que l'étiquette soit alimentée par une batterie incorporée rechargeable ou non rechargable, alimentée ou rechargée par le flux magnétique reçu du dispositif interrogateur, etc.

Certains aspects préférés, mais non limitatifs, du procédé ci-dessus sont les suivants :
* ladite vérification d'identité de l'étiquette met en oeuvre un identificateur d'étiquette mémorisé de façon sécurisée à la fois dans l'étiquette et dans le terminal.
* ladite vérification d'identité de l'étiquette met en oeuvre un identificateur de terminal mémorisé de façon sécurisée à la fois dans l'étiquette et dans le terminal.
* le terminal est un terminal de téléphonie mobile, et lesdites données personnelles sont des données de répertoire.

Selon un deuxième aspect, l'invention vise un ensemble sécurisé à terminal mobile, caractérisé en ce qu'il comprend en combinaison :
- un terminal mobile comprenant une unité centrale associée à une mémoire, des moyens d'entrée de données et des moyens d'affichage de données,
- un dispositif d'émission-réception RFID intégré dans le terminal mobile,
- une étiquette RFID séparée du terminal, contenant une mémoire d'identification et une mémoire de travail, et apte à entrer en communication sans fil de proximité avec le dispositif d'émission-réception,
- des moyens de transaction sans fil prévus dans le terminal et dans l'étiquette et aptes, lors de la création ou la modification de certaines données personnelles dans le terminal, à vérifier l'identité de l'étiquette et, en cas d'identification réussie, à écrire des données correspondantes dans la mémoire de travail de l'étiquette.

Certains aspects préférés, mais non limitatifs, de l'ensemble défini ci-dessus sont les suivants :
* les moyens de vérification mettent en oeuvre un identificateur d'étiquette mémorisé de façon sécurisée à la fois dans l'étiquette et dans le terminal.
* les moyens de vérification mettent en oeuvre un identificateur de terminal mémorisé de façon sécurisée à la fois dans l'étiquette et dans le terminal.
* le terminal est un terminal de téléphonie mobile, et lesdites données personnelles sont des données de répertoire.

D' autres aspects, buts et avantages de la présente invention apparaîtront mieux à la lecture de la description suivante de formes de réalisation préférées de celle-ci, donnée à titre d'exemple non limitatif et faite en référence au dessin annexé, sur lequel :
la figure 1 illustre schématiquement un ensemble terminal mobile/étiquette RFID selon la présente invention, et
la figure 2 illustre une mise en oeuvre préférée de la présente invention dans un environnement où des entités séparées assurent respectivement une première écriture dans des étiquettes, une intégration à des téléphones mobiles, avec écriture supplémentaire dans lesdites étiquettes, et l'exploitation du contenu d'une étiquette en cas de perte ou vol d'un tel téléphone.

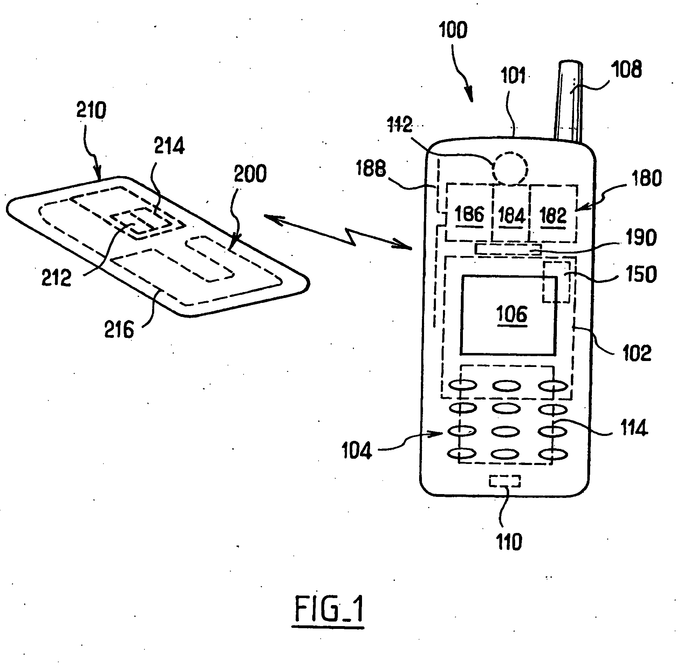

En référence tout d'abord à la figure 1, on a représenté un terminal de téléphonie mobile 100 composé pour l'essentiel d'un boîtier 101 abritant les composants électroniques 102 nécessaires à son fonctionnement (unité centrale, mémoire, lecteur de carte SIM, composants de téléphonie GSM ou autre, etc.) et d'un clavier 104, d'un écran d'affichage par exemple à cristaux liquides 106, d'une antenne 108, d'un microphone 110 et d'un haut-parleur 112. L'ensemble est alimenté par une batterie rechargeable 114. La carte SIM est désignée par la référence 150. On notera qu'il pourrait s'agir de tout autre type de terminal mobile communiquant (terminal sans fil de messagerie électronique, assistant numérique personnel communiquant, etc.

Le terminal 100 est identifié de façon unique, par exemple par son numéro de série de fabrication. Dans le cas des terminaux mobiles européens répondant à la norme GSM, ce numéro peut être le numéro dit IMEI (pour « International Mobile Equipment Identity » en terminologie anglo-saxonne), qui est une identification normalisée à 15 caractères décimaux mise au point par les constructeurs.

Selon l'invention, il est prévu en association unique avec le terminal mobile 100 un sous-ensemble de type RFID (pour « Radio Frequency Identification» en terminologie anglo-saxonne) qui comprend deux éléments, à savoir tout d'abord une étiquette RFID 210 logée dans un objet mobile 200 tel qu'un badge ou carte.

Cette étiquette 210, dont l'architecture électronique est connue en soi, comprend une mémoire de travail 212 apte à stocker des données alphanumériques quelconque, ainsi qu'une zone de mémoire protégée 214 destinée à mémoriser un identificateur d'étiquette infalsifiable et inviolable, noté IDTAG. La mémoire 214 de l'étiquette 210 est également destinée à être personnalisée en contenant le numéro d'identification IMEI du terminal mobile associé 100, ce numéro étant désigné IDTERM dans le présent mémoire.

De préférence, l'identificateur IDTAG est enregistré dans la zone de mémoire 214 lors de la fabrication de l'étiquette 210, par un processus sécurisé.

De préférence, et ici encore de façon connue en soi, les circuits électroniques de l'étiquette 210 sont conçus pour que toute tentative de modification de la valeur de IDTAG (et également de préférence de la valeur de IDTERM) postérieurement à son enregistrement d'origine provoque l'effacement de la zone de mémoire 214, pour ainsi rendre l'étiquette inutilisable comme on le verra en détail plus loin.

En outre, les mémoires 212 et 214 de l'étiquette 210 sont des mémoires rémanentes, même dans le cas où l'étiquette possède une source d'énergie propre, de façon à éviter tout effacement des identificateurs IDTAG ou IDTERM ou des données en cas de défaillance de cette source d'énergie.

La zone de mémoire 214 est protégée de façon à ce que son contenu (le numéro IDTAG inscrit à la fabrication et le numéro personnalisé IDTERM inscrit simultanément ou ultérieurement) soit infalsifiable et inviolable.

Dans le cas où le terminal mobile 100 et l'étiquette 210 (ou l'ensemble de l'objet 200) sont fabriqués sur une même chaîne de fabrication, l'enregistrement de l'identificateur IDTERM dans la zone de mémoire 214 et l'enregistrement de ce même identificateur comme IMEI du terminal mobile sont avantageusement effectués au cours d'un processus commun, de façon à assurer de la façon la plus sécurisée qui soit l'identité entre les deux identificateurs. En variante, on peut charger la valeur de l'identificateur IDTERM ultérieurement, ce dernier étant transmis par la communication RFID dans le cadre d'une instruction d'écriture assurant son enregistrement inviolable et infalsifiable.

La zone 212 de la mémoire 212 est destinée à contenir des données de travail correspondant à des données mémorisées dans le terminal 100 (et plus précisément dans la mémoire propre de ses circuits électroniques 102 et/ou dans la mémoire de la carte SIM 150 - selon la conception et l'ergonomie du terminal et les choix de l'utilisateur).

L'objet 200 qui porte l'étiquette 210 peut dépendre du type de terminal mobile et du type de services proposés. L'approche qui convient dans la plupart des cas est d'intégrer l'étiquette dans un support 200 en matière plastique au format carte de crédit.

Si nécessaire, l'épaisseur de ce support 200 peut être augmentée pour lui permettre de recevoir une source d'énergie propre (batterie rechargeable, ou d'une durée de vie suffisamment longue). Bien entendu, l'étiquette peut en variante être intégrée à tout support apte à être porté sur soi ou à proximité du terminal avec lequel l'étiquette est couplé (portefeuille, monture de lunettes, étui à lunettes, etc.). L'antenne 216 de l'étiquette est en général une boucle ou bobine, qui peut être avantageusement noyée dans le support 200.

Le deuxième élément du sous-ensemble RFID est constitué par un dispositif d'émission-réception RFID 180 embarqué dans le terminal mobile lui-même et comprenant, de façon classique en soi, une unité centrale 182 couplée à une mémoire 184, des circuits d'émission-réception 186, une antenne 188 ainsi que des circuits 190 d'interface avec les circuits électroniques 102 du terminal mobile.

L'unité centrale 182 est animée par des programmes permettant à l'élément 180 de coopérer d'une part avec l'étiquette RFID 210, et d'autre part avec le terminal portable 100, comme on va le voir dans la suite.

La mémoire 184 contient dans une première zone 184 le numéro d'identification de l'étiquette associée 210 (IDTAG). De préférence, l'enregistrement de cet identificateur dans la zone mémoire 184 s'effectue en même temps que son enregistrement dans la zone 214 de mémoire de l'étiquette 210, de façon similairement inviolable et infalsifiable (avec en particulier un effacement en cas de tentative de lecture non autorisée), au cours du même procédé de fabrication sécurisé.

On notera ici que le programme du dispositif d'émission-réception 180 est de préférence conçu pour que la valeur de l'identificateur IDTAG ne puisse à aucun moment être lisible par un utilisateur.

A cet égard, cet identificateur est avantageusement généré aléatoirement par un programme approprié puis inscrit dans les zones mémoire respectives de l'étiquette 210 et du dispositif 180 sans intervention humaine.

Dans la deuxième zone de la mémoire 184 du dispositif 180 est enregistrée, ici encore au cours du processus de fabrication, la valeur de l'identificateur IDTERM, par exemple le numéro IMEI du terminal mobile 100.

Le dispositif d'émission-réception 180 est intégré au terminal mobile 100 de préférence par le constructeur lui-même.

En particulier, l'antenne 188 (typiquement une antenne en boucle dans le cas d'une émission-réception dans des fréquences basses ou moyennes) peut être intégrée dans le pourtour du boîtier 101 du terminal 100 ou de son écran à cristaux liquides 106. Les programmes de la fonction d'interrogation-réponse RFID peuvent être, comme décrit plus haut, mis en oeuvre dans l'unité centrale 182 du dispositif, avec une interface appropriée avec les circuits électroniques 102.

En variante, ces programmes peuvent être mis en oeuvre directement dans les circuits électroniques, auquel cas le dispositif 180 peut être vu comme un simple périphérique d'émission-réception RFID.

La taille de la mémoire de travail 212 prévue dans l'étiquette 210 est choisie en fonction des besoins. Par exemple, elle peut être choisie suffisamment grande pour contenir l'ensemble du répertoire (nom et numéro de téléphone des contacts) contenues dans le terminal mobile 100.

Avantageusement, dans le cas où l'ensemble RFID est livré à un fabricant de terminaux mobiles pour intégration, l'ensemble livré comprend
- l'antenne RFID côté dispositif 180, à intégrer par exemple dans le boîtier ou l'écran LCD du terminal mobile ;
- les circuits d'émission-réception et programmes associés, de préférence sous forme d'une puce unique,
- un support 200 intégrant l'étiquette RFID 210 ;
- un numéro IDTAG correspondant à celui qui a été pré-chargé dans l'étiquette 210 à sa fabrication, qui est soit fourni de façon sécurisée sur papier, soit contenu dans un support électronique (et éventuellement dans la mémoire des circuits d'émission-réception eux-mêmes), soit fourni de toute autre manière.

Le constructeur des terminaux mobiles assure de son côté l'intégration matérielle et logicielle des divers composants et, si nécessaire, la personnalisation de chaque terminal avec le numéro IDTAG fourni lorsqu'il n'est pas déjà intégré.

On va maintenant décrire en détail le fonctionnement du terminal mobile en coopération avec l'ensemble RFID tel que décrit ci-dessus.

En premier lieu, lors de la première utilisation du terminal mobile (typiquement après l'achat), le propriétaire reçoit donc d'une part le terminal équipé de son dispositif 180, et d'autre part un support 200 équipé de son étiquette RFID.

A ce moment là, la mémoire de répertoire du terminal (dans ses circuits 102 ou sur carte SIM) est vide, de même que la mémoire de travail 212 de l'étiquette 210.

En revanche, les identificateurs IDTERM et IDTAG sont présents d'une part dans l'étiquette 210, et d'autre part dans le terminal mobile.

En premier lieu, à chaque fois que l'utilisateur ajoute ou modifie un contact dans le répertoire, selon la procédure propre au terminal mobile, telle que déterminée par son système d'exploitation, la validation de l'entrée provoque, en sus de la validation de l'écriture en mémoire des données de contact dans le terminal, la succession d'opérations suivante :
- affichage, sur l'écran 106 du terminal, d'un message invitant l'utilisateur à s'assurer que le terminal est suffisamment proche du support 200 contenant l'étiquette RFID 210 (en général placée dans une poche de vêtement de l'utilisateur) ; typiquement la distance maximale de quelques centimètres à un mètre ou davantage, selon la technologie utilisée et la puissance d'émission choisie),
- envoi aux circuits d'émission-réception 180 d'une instruction visant à provoquer la transmission de ces mêmes données par ondes radio à l'étiquette 210, en vue d'enregistrer les mêmes données dans sa mémoire de travail 212 ; cette opération met en oeuvre une identification préalable de l'étiquette 210 par comparaison des identificateurs IDTAG et/ou IDTERM contenus respectivement dans le terminal 100 et dans l'étiquette 210 ; le succès de cette identification déterminé dans la logique d'émission-réception associée au dispositif 180 provoque l'envoi des données de contact créées ou modifiées dans le terminal 100 vers l'étiquette 210 et la mémorisation de ces données dans la zone de travail 212 de ladite étiquette.

Toute création ou modification des données de répertoire provoque une nouvelle mise en oeuvre des opérations ci-dessus.

On notera ici que, lorsque le terminal mobile 100 n'est pas suffisamment proche de l'étiquette 210 pour autoriser l'enregistrement décrit ci-dessus, l'opération est réservée jusqu'au moment où cette proximité se réalise. A cet effet, on peut prévoir que le dispositif d'émission-réception 180 interroge périodiquement l'étiquette RFID 210 pour déterminer si elle est dans son champ de portée.

Ainsi, la mémoire de travail 212 de l'étiquette 210 contient la duplication exacte des données de répertoire contenues dans le terminal mobile. Bien entendu, on peut prévoir que d'autres types de données (agenda, etc.) soient dupliquées dans l'étiquette 210.

De la sorte, lorsque le terminal 100 est égaré ou volé, l'utilisateur conserve à sa disposition, dans le support 200 séparé du terminal, une copie de ses données personnelles (répertoire) et peut, par un processus que l'on détaillera plus loin, recharger ces mêmes données dans un nouveau terminal.

Le dispositif d'émission-réception 180 intégré au terminal peut également, alternativement ou en complément, être utilisé comme dispositif anti-vol destiné à décourager les vols de tels terminaux.

A cet effet, on prévoit de mettre en oeuvre la fonction de « déblocage du clavier » par une identification de l'étiquette RFID par dialogue sans fil entre le dispositif 180 et ladite étiquette.

On rappellera à ce sujet que, dans la plupart des terminaux mobiles de téléphonie actuels, il existe une fonction automatique de blocage du clavier, qui inhibe toute action sur les touches du clavier 104 (à l'exception de la touche de décrochage lors de la réception d'un appel) au bout d'une (courte) temporisation après la fin de l'utilisation du terminal (en général un raccrochage dans le cas d'un terminal de téléphonie).

Et en général, le clavier est débloqué en tapant sur celui-ci une combinaison donnée (en général publique) de touches.

On prévoit ici de réaliser la fonction de déblocage du clavier par un simple mouvement consistant à approcher le terminal 100 de l'étiquette 210 avec une distance suffisamment courte pour que la communication radio entre le dispositif 180 et l'étiquette puisse s'effectuer. A cet effet, le dispositif 180 est programmé pour effectuer une interrogation périodique (la valeur de la période étant comprise par exemple entre une fraction de seconde et quelques secondes, et avantageusement paramétrable par l'utilisateur) de l'étiquette 210, invitant celle-ci à transmettre les valeurs de IDTAG et/ou IDTERM contenues dans sa mémoire.

Dès que l'étiquette 210 est à portée, elle réagit à ce message en effectuant la transmission précitée. Le dispositif 180 (ou en variante la logique du terminal elle-même) réalise la comparaison avec le ou les identificateurs IDTAG et/ou IDTERM mémorisés localement.

En cas de correspondance, le clavier 104 du terminal est déverrouillé.

Naturellement, dans le cas où le terminal (cas d'un terminal de téléphonie) est dans une poche de vêtement de l'utilisateur, de façon directement adjacente au support 200 intégrant l'étiquette RFID 210, alors le déblocage du clavier est réalisé à chaque interrogation (ou, en variante, la temporisation de blocage est choisie suffisamment longue pour que le clavier reste en permanence débloqué).

On peut apporter à cette fonctionnalité de nombreuses variantes.

En particulier, le déblocage du clavier peut non pas résulter d'une interrogation périodique et automatique de l'étiquette, mais d'une interrogation (effectuée une fois ou plusieurs fois) dès lors que utilisateur appuie sur une touche déterminée du clavier (par exemple la touche de décrochage).

Selon une autre variante, on peut utiliser pour la vérification de l'identité de l'étiquette RFID, soit en complément des identificateurs IDTERM et IDTAG, soit à la place de ceux-ci, la comparaison d'une certaine partie ou combinaison des données de répertoire mémorisées dans l'étiquette 210 et dans le terminal 100, ces données étant censées être en permanence identiques comme on l'a vu plus haut.

Grâce à cette fonctionnalité, dès lors que le terminal a été égaré ou volé, et donc éloigné de l'étiquette RFID associée, le clavier reste en permanence bloqué et plus aucun appel ne peut être passé.

En revanche, le terminal peut continuer à recevoir des appels ce qui, dans certains cas, peut faciliter sa recherche.

De nombreuses variantes et modifications peuvent être apportées à ce qui a été décrit dans ce qui précède. En particulier, le support 200 peut abriter une pluralité d'étiquettes RFID, en lecture seule, en lecture-écriture, etc. en fonction des fonctions recherchées.

En outre, on peut avantageusement livrer avec le terminal mobile 100 deux supports 200 ou davantage portant autant d'étiquettes RFID constituées de clones les unes des autres.

Enfin on peut avantageusement exploiter le complément de sécurité offert par l'étiquette RFID comme moyen d'authentification par exemple dans le cadre de paiements sécurisés via téléphone mobile.

Plus précisément, on connaît déjà un certain nombre de dispositifs de paiement sécurisé mettant en jeu par exemple une transaction via Internet doublée d'une transaction avec le téléphone mobile du même utilisateur, de manière à accroître la sécurité de la transaction. On connaît également des dispositifs de paiement sécurisé via le seul téléphone mobile.

Selon cet aspect de la présente invention, on prévoit que la transaction de paiement fait l'objet d'une sécurisation supplémentaire par un processus qui met en oeuvre un processus de communication avec le terminal dans lequel le terminal vérifie si le dispositif 180 peut interroger l'étiquette 210 et si la valeur IDTAG et/ou IDTERM qu'elle contient est identique à la valeur correspondante mémorisée dans le dispositif 180.

Dans la négative, la transaction n'est pas acceptée et l'interface utilisateur du terminal peut inviter l'utilisateur à vérifier la présence de la carte au voisinage du terminal.

Avantageusement, cette procédure est mise en oeuvre de façon autonome par le terminal, c'est-à-dire de façon transparente pour l'équipement distant dont, ainsi, la logique n'a pas à être modifiée.

Selon une autre forme de réalisation, non illustrée, les étapes de communication avec l'étiquette et de vérification d'identité, telles que décrites dans ce qui précède, peuvent être avantageusement mises en oeuvre en association avec tout type d'appareil intelligent, communiquant ou non selon la fonctionnalité envisagée (ordinateur fixe ou portable, assistant numérique personnel, téléphone mobile, terminal sans fil de messagerie électronique tel que « Blackberry » (marque déposée), ainsi que tout appareil hybride de ceux-ci, etc.).

Ainsi, dans l'application de l'invention à la mise en marche ou l'utilisation d'un appareil sous condition de la détection de l'étiquette RFID associée, un tel appareil comporte en général un commutateur, bouton ou autre dispositif (électromécanique ou électronique) de mise en marche/arrêt ; lors de la mise en marche par l'utilisateur, les étapes de vérification conformes à l'invention sont mise en oeuvre à un stade donné (on s'assure toutefois que le dispositif 180 reçoive l'énergie électrique dont il a besoin), et c'est seulement si l'étiquette RFID associée à l'appareil est présente et a été lue avec succès que la poursuite de la mise en marche, jusqu'à rendre l'appareil normalement utilisable, est effectuée.

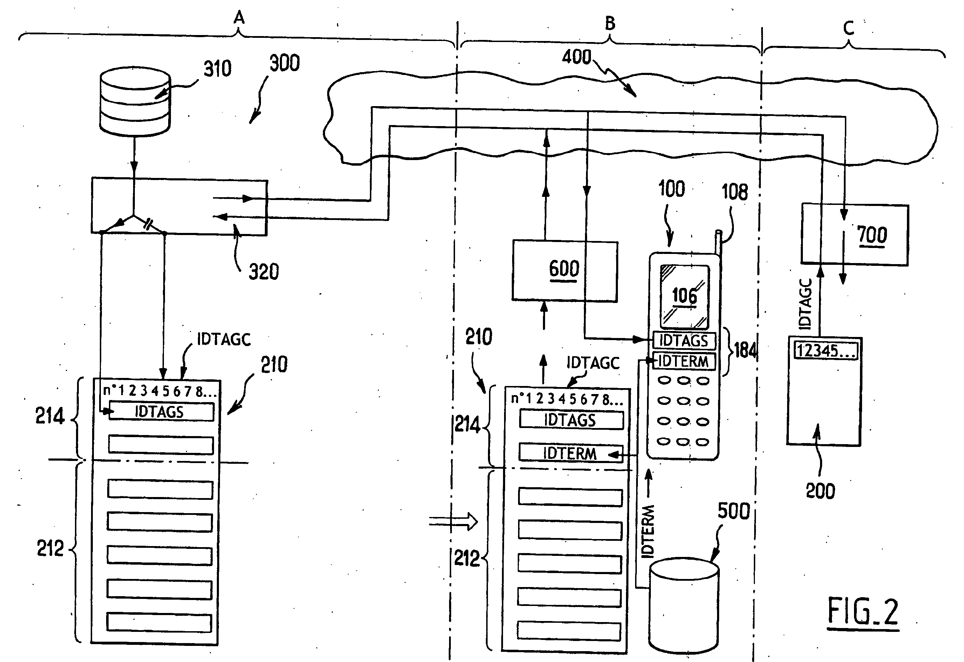

On va maintenant décrire en référence à la figure 2 une répartition préférée des tâches nécessaires à la mise en oeuvre de la présente invention entre plusieurs intervenants.

Ainsi la figure 2 illustre dans la zone A une entité apte à délivrer des étiquettes 210 pré-inscrites (qu'elles soient fixées sur leur support 200 ou non).

Plus précisément, un système informatique 300 incluant une base de données 310 de numéros d'identification IDTAG est apte à stocker, de façon appariée, un identificateur d'étiquette secret IDTAGS et un identificateur d'étiquette en clair IDTAGC, lisible à l'oeil ou optiquement (code-barres, etc.).

L'identificateur IDTAGC est inscrit en clair sur son étiquette 210 (ou sur le support 200 de l'étiquette dans le cas où les deux sont solidarisés de façon inviolable), tandis que le système est apte à écrire dans un emplacement de la mémoire protégée 214 l'identificateur IDTAGS.

Dans un exemple de réalisation, IDTAGS est obtenue par un algorithme de chiffrement à clé publique ou privée, de façon conventionnelle, de IDTAGC ou de toute autre information mémorisée dans la base de données 310.

On décrira plus loin le rôle du bloc logique 320.

On notera ici que les opérations correspondant à la zone A de la figure 2 peuvent être mise en oeuvre par un fabricant d'étiquettes RFID, ou un opérateur téléphonique, ou de façon répartie entre les deux.

La zone B est celle du fabricant de téléphones mobiles.

Il reçoit de l'entité A des étiquettes 210 ayant chacune leur information IDTAGC et IDTAGS telles que décrites ci-dessus.

Le fabricant intègre le dispositif d'interrogation 180 décrit plus haut, et écrit dans la zone de mémoire dédiée 184 du terminal 100 d'une part l'identificateur IDTERM délivré par une base de données 500 qui lui est propre (ou partagée avec d'autres constructeurs, comme dans le cas de la numérotation normalisée IMEI), et d'autre part l'identificateur IDTAGS qui est délivré par communication sécurisée, via une interface 600 et un réseau de communication 400, avec le système informatique 300 de l'entité A.

Plus précisément, un processus automatisé associé à la chaîne de fabrication de l'entité B, pour chaque terminal, adresse au système 300 une requête contenant l'identificateur IDTAGC lu sur l'étiquette 210 qui a été livrée par A et qui est destinée à être associée à ce terminal particulier. En réponse, le système 300, via l'unité 320, envoie à l'entité B la valeur de IDTAGS qui est alors chargée dans la mémoire 184 du terminal 100.

L'identificateur IDTERM est également inscrit dans l'étiquette 210 par le constructeur.

L'étiquette 210 et le terminal 100 sont alors appariés par le couple IDTERM/IDTAGS, de la même manière que décrit plus haut.

En variante, on peut prévoir que le constructeur d'appareils adresse à l'industriel responsable de l'écriture dans les étiquettes, des fichiers contenant l'ensemble des identificateurs IDTERM d'un lot de terminaux fabriqués, à fabriquer ou en cours de fabrication, et que ce soit cet industriel qui procède à l'écriture de ces identificateurs dans les étiquettes respectives.

On notera ici que le bloc logique 320 peut avantageusement comporter un compteur permettant de comptabiliser le nombre de systèmes RFID activés, à des fins de statistiques, de contrôle, de traçabilité, de gestion, etc.

On a également illustré sur la figure 2 dans une zone C une entité opérateur, ou distributeur, apte à gérer une situation où le terminal 100 d'un utilisateur a été perdu ou volé, et où l'utilisateur n'a plus à sa disposition que l'objet 200 portant l'étiquette RFID 210.

Dans ce cas, à l'aide d'un dispositif de lecture approprié 700 ou manuellement, la valeur de IDTAGC est lue sur l'étiquette, et un processus de communication avec l'équipement informatique 300 via le réseau 400 permet d'obtenir à partir de la base de données 310, ou par nouvelle mise en oeuvre de algorithme ayant permis d'engendrer IDTAGS à partir de IDTAGC, la valeur de IDTAGS. Celle-ci est alors confrontée avec la valeur de IDTAGS telle que mémorisée dans l'étiquette 210 et lue par le dispositif 700. C'est seulement dans le cas d'une identité entre les deux, constatée par le dispositif 700, que les données personnelles de l'utilisateur, contenues dans la zone de travail 212 de l'étiquette, peuvent être lues par le dispositif 700 pour pouvoir être chargées dans un nouveau terminal 100 mis à la disposition de l'utilisateur (avec une nouvelle étiquette 210 appariée avec ce terminal).

Ce chargement s'effectue par exemple :
- par écriture dans la zone de travail 212 de la nouvelle étiquette 210 par un dispositif de communication sans fil RFID incorporé dans le dispositif 700, puis transfert des données vers le terminal associé 100 ;
- par écriture dans la carte SIM du nouveau terminal 100 à l'aide d'un dispositif de lecture/écriture de carte à puce incorporé au dispositif 700,
- par communication avec le nouveau terminal 100 via le réseau téléphonique, etc.

Ainsi l'utilisateur a pu, de façon sécurisée, récupérer l'ensemble de ses données personnelles.

De préférence, et en particulier dans le but de simplifier les interventions humaines et de réduire le risque de fraude, on prévoit que chaque dispositif 700 possède ses propres informations d'identification et/ou authentification, de telle manière que le serveur auquel il se connecte puisse déterminer s'il s'agit bien d'un dispositif habilité.

De façon également avantageuse, chaque dispositif 700 mémorise des paramètres lui permettant de communiquer avec des serveurs correspondant à différents opérateurs. Le dispositif identifie alors le terminal avec lequel il doit entrer en communication par exemple à partir d'un champ particulier, réservé à cet effet, de l'identificateur IDTAGC lu sur l'étiquette 210 ou son support 200.

Selon une autre application de l'invention, un terminal de téléphonie mobile équipé comme décrit plus haut, c'est-à-dire capable de lire sans contact des étiquettes RFID, peut être avantageusement utilisé non seulement comme téléphone mobile, selon les modalités décrites, mais également comme lecteur générique ou spécifique d'étiquettes RFID autres que celle participant aux processus de sécurisation selon l'invention. Si le téléphone mobile peut en même temps accéder à des bases de données distantes ayant une relation avec les étiquettes RFID lues, alors le terminal de téléphonie devient en même temps un terminal pouvant avoir des applications très vastes dans le contrôle, l'identification, la gestion, etc.

Par exemple, dans un environnement où les papiers d'identité des personnes physiques sont dotés d'une étiquette RFID (des projets existent en ce sens dans un certain nombre de pays), des agents de sécurité (policiers, gendarmes, etc.) peuvent être dotés d'un tel terminal dont l'unité d'émission/réception 180 est capable de lire les informations de ces étiquettes, et d'accéder, via le réseau téléphonique sans fil et de préférence de façon cryptée, aux bases de données d'un système central et d'y consulter, à partir des informations lues dans l'étiquette RFID, des données relatives à la personne.

Une autre fonctionnalité possible dans ce contexte est d'utiliser des terminaux mobiles dotés d'une fonction de prise de vues en images numériques, de prendre une photographie de la personne faisant l'objet de la vérification et de l'envoyer au système central, en association avec les données transmises selon le paragraphe précédent. Une vérification supplémentaire, par comparaison avec une photographie associée à la personne identifiée et mémorisée au niveau du système central, peut ainsi être réalisée.

Selon un autre exemple, des techniciens de maintenance peuvent accéder à distance à des données techniques ou autres (machine sous garantie, etc.) relatives à une machine sur laquelle ils doivent intervenir par lecture préalable d'une étiquette RFID identifiant cette machine et obtention via le réseau téléphonique desdites données techniques à partir d'une base de données.

Selon une autre amélioration de la présente invention, on peut prévoir que les différentes fonctionnalités décrites (fonction basique de téléphonie, transaction bancaire, lecture de papiers d'identité, etc.) et plus généralement toutes les fonctionnalités rendues techniquement possibles avec un terminal selon la présente invention soient rendues possibles ou « autorisation » seulement si un champ particulier des informations contenues dans l'étiquette RFID associée au terminal possède la valeur appropriée.

Plus précisément, on peut prévoir par exemple que l'identificateur IDTAG soit subdivisé en plusieurs champs et en particulier :
- un champ du numéro de série, unique, de l'étiquette,
- un champ identifiant le constructeur de l'étiquette,
- un ou plusieurs champs de dates (mise en service, validité, etc.),
- un champ d'autorisation de fonctionnalités comportant un nombre de bits suffisant en fonction du nombre de fonctionnalités à autoriser ou interdire.

Dans le présent exemple, on prévoit un champ de deux chiffres décimaux où :
* la valeur 00 signifie que seule la fonctionnalité de téléphonie (+ répertoire, carnet d'adresses,...) est autorisée,
* la valeur 01 signifie que les fonctionnalités de téléphonie et de transactions bancaires sont autorisées,
* la valeur 02 signifie que les fonctionnalités de téléphonie et de vérification d'identité des personnes sont autorisées, etc.

Dans ce cas, le terminal comporte la logique nécessaire pour sélectivement activer ou non les routines nécessaires après lecture de ce champ particulier de l'identifiant IDTAG contenu dans l'étiquette, et fonction de la valeur de ce champ.

De retour maintenant sur les fonctionnalités de transaction bancaire, on a décrit plus haut une utilisation du système selon l'invention dans une version de base de complément de sécurisation d'une telle transaction

On va maintenant décrire une mise en jeu avantageuse du champ d'autorisation de fonctionnalités tel que décrit ci-dessus dans une application où c'est une carte bancaire émise par un organisme financier qui s'intègre directement dans le système de la présente invention. On prendra comme exemple, par commodité, la carte bancaire française dotée d'une puce.

Considérons une banque qui souhaiterait émettre une nouvelle carte bancaire sécurisée destinée à la cible des porteurs de téléphones-lecteurs RFID selon la présente invention. La banque va s'adresser à un fabricant, qui lui fournira une carte au format carte de crédit telle similaire à la carte 200 telle que décrite plus haut. (On notera ici que cette carte est conçue pour être personnalisable, de telle sorte que la banque puisse écrire dans un champ spécifique de l'étiquette 210 un numéro de téléphone, au moment de la personnalisation finale de la carte.)

C'est cette carte 200 dotée de son étiquette RFID 210 qui est alors utilisée par la banque comme support des éléments constitutifs de la carte bancaire à fabriquer : graphismes, numéros en relief (No. de carte, titulaire, expiration, etc.), hologramme, puce, etc., de manière à ce que la carte devienne aussi une carte bancaire classique, à l'exception du fait qu'il s'agit d'une carte « hybride » qui contient en outre une étiquette RFID (ou plusieurs étiquettes, notamment si plusieurs applications sont envisagées).

Pour faciliter la compréhension de cet exemple, on considère ici que la carte est d'un type particulier dit « à autorisation systématique », ce qui signifie qu'à chaque usage, le terminal de paiement par carte bancaire provoque un appel au centre d'autorisation de la banque émettrice. Mais chaque banque peut choisir de bâtir autour de cette carte le service bancaire qu'elle souhaite, puisque la carte hybride reste compatible avec tous les types de services cartes bancaires.

Parallèlement, la banque doit équiper ses agences d'un lecteur spécifique permettant la personnalisation finale de la carte de la manière suivante : quand le client vient chercher sa carte bancaire hybride à l'agence, il doit se munir de son téléphone mobile, et de sa carte RFID 200 qui était préexistante (en général livrée avec le téléphone lors de l'achat de celui-ci).

La carte 200 et la carte bancaire hybride sont mises en relation avec le lecteur spécifique qui déclenche ensuite un appel vers un système central, comme décrit plus haut. Le système central renvoie alors des informations d'autorisation permettant au lecteur de cloner les informations de la carte RFID 200 vers l'étiquette RFID de la carte hybride. En outre, le lecteur spécifique charge dans l'étiquette RFID de la carte hybride un numéro de téléphone propre à la banque. Parallèlement, le numéro de téléphone mobile du client est enregistré dans le système d'information bancaire. La carte hybride peut alors être remise au client. On notera ici que le processus de génération de la carte hybride peut également comporter certains paramétrages permettant au client un usage conforme à ses besoins, et par exemple une durée d'usage limitée (paramétrable à la création) de la carte.

Le fonctionnement du système selon l'invention complété par cette carte bancaire hybride est le suivant : tout d'abord, les cartes de cette nature, outre le fait qu'elles demandent une autorisation au centre bancaire à chaque tentative de transaction, sont repérées dans le système d'information central de la banque comme étant systématiquement bloquées et comme ne pouvant être débloquées que sur réception d'un appel téléphonique vers le numéro enregistré lors de la personnalisation de la carte.

Le client qui souhaite se servir de sa carte bancaire hybride pour procéder à un achat, doit tout d'abord approcher la carte de son téléphone à lecteur RFID. Comme la carte bancaire dispose de toutes les caractéristiques de la carte d'origine 200, le téléphone va se débloquer. Mais en outre, comme le logiciel du téléphone a identifié la fonctionnalité « transaction bancaire » par le contenu égal à 01 du champ correspondant de l'information IDTAG (voir plus haut), le téléphone mobile déclenche alors un appel vers le centre bancaire après lecture du numéro de téléphone qui a été écrit lors de la personnalisation de la carte bancaire hybride.

Lorsque le centre d'autorisation de la banque reçoit cet appel, il vérifie que c'est bien le téléphone ayant l'identification attendue qui appelle et, dans l'affirmative, donne l'autorisation de la transaction.

Le processus est très simple pour l'utilisateur. Il doit simplement faire le geste de rapprocher sa carte bancaire de son téléphone, et toutes les opérations ci-dessus sont effectuées automatiquement.

Ainsi, un tentative d'utilisation de la carte bancaire hybride sans avoir rapproché la carte du téléphone ne permet pas d'obtenir l'autorisation au centre bancaire (et ceci même si d'autres processus de vérification/authentification (saisie de code, etc.) sont correctement réalisées).

Bien entendu, de nombreuses autres variantes peuvent être apportées à l'invention.

En particulier, une même étiquette 210 (ou un même support d'étiquette, recevant alors le cas échéant plusieurs étiquettes indépendantes) peut avantageusement combiner deux ou davantage des différentes fonctionnalités décrites dans ce qui précède, ave un même équipement mobile ou avec plusieurs équipements mobiles différents.

En outre, les différents échanges d'informations décrits dans ce qui précède, et en particulier ceux liés à la lecture ou à l'écriture dans une étiquette RFID, peuvent être réalisés avec tout type de codage ou de cryptage, en utilisant en particulier les procédés de cryptage les plus adaptés aux applications considérés. Par exemple, on pourra s'appuyer sur les procédés de signature numérique, authentification ou certification à clé de chiffrement publique.

Enfin on notera que, dans un exemple particulier où l'étiquette appartient à une monture de lunettes, il peut être particulièrement intéressant de coupler la commercialisation des terminaux selon l'invention avec le réseau existant des opticiens, avec un financement partiel ou total des montures (hors verres) par les opérateurs téléphoniques. Dans ce type d'exemple, on prévoit de préférence, pour le cas où les lunettes seraient perdues, une carte RFID de secours.

## Revendications

1. Procédé de sauvegarde de données personnelles contenues dans un terminal 1 mobile (100) le terminal comprenant une unité centrale associée à une mémoire (184), des moyens d'entrée de données et des moyens d'affichage de données, **caractérisé en ce qu'**il comprend les étapes suivantes :
- prévoir dans le terminal un dispositif d'émission-réception RFID (180),
- prévoir de façon séparée du terminal une étiquette RFID (210) contenant une mémoire d'identification et une mémoire de travail, et apte à entrer en communication sans fil de proximité avec le dispositif d'émission-réception,
- lors de la création ou la modification de certaines données personnelles dans le terminal à l'aide des moyens d'entrée de données, écrire des données correspondantes dans la mémoire de travail (212) de l'étiquette (210) après avoir effectué une vérification d'identité de ladite étiquette.

2. Procédé selon la revendication 1, **caractérisé en ce que** ladite vérification d'identité de l'étiquette met en oeuvre un identificateur d'étiquette mémorisé de façon sécurisée à la fois dans l'étiquette et dans le terminal.

3. Procédé selon la revendication 1 ou 2, **caractérisé en ce que** ladite vérification d'identité de l'étiquette met en oeuvre un identificateur de terminal mémorisé de façon sécurisée à la fois dans l'étiquette et dans le terminal.

4. Procédé selon l'une des revendications 1 à 3, **caractérisé en ce que** le terminal est un terminal de téléphonie mobile et **en ce que** lesdites données personnelles sont des données de répertoire.

5. Ensemble sécurisé à terminal mobile (100), **caractérisé en ce qu'**il comprend en combinaison :
- un terminal mobile (100) comprenant une unité centrale associée à une mémoire (184), des moyens d'entrée de données et des moyens d'affichage de données,
- un dispositif d'émission-réception RFID (180) intégrée dans le terminal mobile,
- une étiquette RFID (210) séparée du terminal, contenant une mémoire d'identification et une mémoire de travail (212), et apte à entrer en communication sans fil de proximité avec le dispositif d'émission-réception,
- des moyens de transaction sans fil prévus dans le terminal et dans l'étiquette et aptes, lors de la création ou la modification de certaines données personnelle dans le terminal, à vérifier l'identité de l'étiquette (210) et, en cas d'identification réussie, à écrire des données correspondantes dans la mémoire de travail (212) de l'étiquette.

6. Ensemble selon la revendication 5, **caractérisé en ce que** les moyens de vérification mettent en oeuvre un identificateur d'étiquette mémorisé de façon sécurisée à la fois dans l'étiquette et dans le terminal.

7. Ensemble selon la revendication 5 ou 6, **caractérisé en ce que** les moyens de vérification mettent en oeuvre un identificateur de terminal mémorisé de façon sécurisée à la fois dans l'étiquette et dans le terminal.

8. Ensemble selon l'une des revendications 5 à 7, **caractérisé en ce que** le terminal est un terminal de téléphonie mobile et **en ce que** lesdites données personnelles sont des données de répertoire.

## Patentansprüche

1. Verfahren zum Sichern von persönlichen Daten, die auf einem mobilen Endgerät (100) enthalten sind, das eine einem Speicher (184) zugeordnete Zentraleinheit, Mittel zur Eingabe von Daten und Mittel zum Anzeigen von Daten umfasst, **gekennzeichnet durch** die folgenden Schritte:
- Vorsehen einer RFID-Sende-/Empfangseinrichtung (180) in dem Endgerät,
- Vorsehen eines vom Endgerät getrennten RFID-Etiketts (210), das einen Identifikationsspeicher und einen Arbeitsspeicher umfasst und das dazu geeignet ist, eine kabellose Nahverbindung mit der Sende-/Empfangseinrichtung einzugehen,
- bei der Erzeugung oder der Modifikation bestimmter persönlicher Daten in dem Endgerät mittels der Mittel zur Eingabe von Daten, Schreiben entsprechender Daten in den Arbeitsspeicher (212) des Etiketts (210), nachdem eine Identitätsüberprüfung des Etiketts durchgeführt wurde.

2. Verfahren nach Anspruch 1, **dadurch gekennzeichnet, dass** die Identitätsüberprüfung des Etiketts Gebrauch macht von einem sowohl auf dem Etikett als auch in dem Endgerät gesichert abgespeicherten Etikettenidentifizierer.

3. Verfahren nach Anspruch 1 oder 2, **dadurch gekennzeichnet, dass** die Identitätsüberprüfung des Etiketts Gebrauch macht von einem sowohl auf dem Etikett als auch in dem Endgerät gesichert abgespeicherten Endgeräteidentifizierer.

4. Verfahren nach einem der Ansprüche 1 bis 3, **dadurch gekennzeichnet, dass** das Endgerät ein Mobiltelefonie-Endgerät ist und dass die persönlichen Daten Verzeichnis- bzw. Adressbuchdaten sind.

5. Gesicherte Mobilendgeräteanordnung, **dadurch gekennzeichnet, dass** sie in Kombination folgendes umfasst:
- ein mobiles Endgerät (100) mit einer einem Speicher (184) zugeordneten Zentraleinheit, Mitteln zur Eingabe von Daten und Mitteln zum Anzeigen von Daten,
- eine in dem mobilen Endgerät integrierte RFID-Sende-/Empfangseinrichtung (180),
- ein von dem Endgerät separates RFID-Etiketts (210), das einen Identifikationsspeicher und einen Arbeitsspeicher (212) umfasst und dazu geeignet ist, eine kabellose Nahverbindung mit der Sende-/Empfangseinrichtung einzugehen,
- kabellose Transaktionsmittel, die in dem Endgerät und in dem Etikett vorgesehen sind und dazu geeignet sind, bei der Erzeugung oder der Modifikation bestimmter persönlicher Daten in dem Endgerät die Identität des Etiketts (210) zu prüfen und im Falle einer erfolgreichen Identifikation entsprechende Daten in den Arbeitsspeicher (212) des Etiketts zu schreiben.

6. Anordnung nach Anspruch 5, **dadurch gekennzeichnet** das die Überprüfungsmittel Gebrauch machen von einem sowohl auf dem Etikett als auch in dem Endgerät gesichert abgespeicherten Etikettenidentifizierer.

7. Vorrichtung nach Anspruch 5 oder 6, **dadurch gekennzeichnet dass** die Verifikationsmittel Gebrauch machen von einem sowohl auf dem Etikett als auch in dem Endgerät gesichert abgespeicherten Endgeräteidentifizierer.

8. Vorrichtung nach einem der Ansprüche 5 bis 7, **dadurch gekennzeichnet, dass** das Endgerät ein Mobiltelefonie-Endgerät ist und dass die persönlichen Daten Verzeichnis- bzw. Adressbuchdaten sind.

## Claims

1. A method for the back up of personal data contained in a mobile terminal (100), the mobile terminal comprising a central unit associated to a memory (184), data input means and data display means, **characterized in that** it comprises the following steps:
- providing in the terminal a RFID transmission-reception device (180),
- providing separately from the terminal a RFID tag (210) containing an identification memory and a working memory, and capable of entering into near-field wireless communications with the transmission-reception device,
- upon generation or modification of certain personal data in the terminal by means of the data input means, writing corresponding data in the working memory (212) of the tag (210) after having performed an identity check of said tag.

2. A method according to claim 1, **characterized in that** said tag identity check involves a tag identifier securely stored both in the tag and in the terminal.

3. A method according to claim 1 or 2, **characterized in that** said tag identity check involves a terminal identifier securely stored both in the tag and in the terminal.

4. A method according to any one of claims 1 to 3, **characterized in that** the terminal is a mobile phone terminal and **in that** said personal data are address book data.

5. A secure mobile terminal assembly (100), characterized it comprises in combination:
- a mobile terminal (100 comprising a central unit associated to a memory (184), data input means and data display means,
- a RFID transmission-reception device (180) integrated in the mobile terminal,
- a RFID tag (210) separate from the terminal, containing an identification memory and a working memory (212) and capable of entering into near-field wireless communications with the transmission-reception device,
- wireless transaction means provided in the terminal and in the tag and capable, upon generation or modification of certain personal data in the terminal, of checking the identity of the tag (210) and, in case of successful identification, or writing corresponding data in the working memory (212) of the tag (210).

6. An assembly according to claim 5, **characterized in that** the checking means involve a tag identifier securely stored both in the tag and in the terminal.

7. An assembly according to claim 5 or 6, **characterized in that** the checking means involve a terminal identifier securely stored both in the tag and in the terminal.

8. An assembly according to any one of claims 5 to 7, **characterized in that** the terminal is a mobile phone terminal and **in that** said personal data are address book data.
